# EUROPÄISCHE PATENTSCHRIFT

(11) **EP 3 123 853 B1**
(45) Veröffentlichungstag und Bekanntmachung des Hinweises auf die Patenterteilung: **10.07.2019**
(21) Anmeldenummer: 16169162.1
(22) Anmeldetag: 11.05.2016
(51) Int. Cl.: A01D 45/02

(54) **PFLÜCKVORRICHTUNG ZUM ERNTEN VON STÄNGELIGEM ERNTEGUT**
PICKING DEVICE FOR HARVESTING STALK CROPS
APPAREIL DE RÉCOLTE DESTINÉ À CUEILLIR DES PLANTES À FLEURS SUR TIGES

(30) Priorität: 29.07.2015 DE 102015112440
(43) Veröffentlichungstag der Anmeldung: 01.02.2017
(73) Patentinhaber: CLAAS Hungaria Kft., 5200 Törökszentmiklós (HU)
(72) Erfinder: Lenti, Tibor, 5662 Csanádapáca (HU); Denke, Tamás, 1089 Budapest (HU); Pàzsik, András, 5600 Békéscsaba (HU)
(74) Vertreter: CLAAS Gruppe

(56) Entgegenhaltungen:
- DE-A1- 19 622 719
- US-A- 4 845 930
- US-A1- 2012 196 710

## Beschreibung

Die vorliegende Erfindung betrifft eine Pflückvorrichtung zum Ernten von stängeligem Erntegut, die zumindest eine an einem Rahmenteil der Pflückvorrichtung angeordnete Pflückeinheit umfasst. Die Pflückeinheit weist eine Fördervorrichtung, die eine um Umlenkelemente endlos umlaufende, mit einer Spannvorrichtung versehene Förderkette zur Förderung des Erntegutes umfasst, sowie paarweise unterhalb der Fördervorrichtung zueinander beabstandet angeordnete Pflückplatten auf, die entlang der Fördervorrichtung einen Pflückspalt ausbilden. Die Breite des Pflückspaltes ist mittels wenigstens einer senkrecht zum Verlauf des Pflückspaltes verstellbaren Pflückplatte variierbar. Unterhalb des Pflückspaltes sind eine oder mehrere Pflückwalzen angeordnet.

Derartige Pflückvorrichtungen finden insbesondere beim Ernten von Mais Anwendung. Dabei werden Maisstängel in den Pflückspalt der Pflückeinheit eingeführt und von der Förderkette entlang der unterhalb der Fördervorrichtung angeordneten Pflückwalzen. Die Pflückwalzen ziehen das Erntegut in Richtung des Pflückspaltes nach unten, wobei beim Passieren der Pflückplatten die Fruchtstände vom Stängel abgestreift werden. Die Förderkette ist zur Kompensation der allmählich auftretenden Kettendehnung mit einer Spannvorrichtung versehen, die gegen die Wirkung einer Feder, insbesondere Druckfeder, ein Spannen der Förderkette ermöglicht. Sowohl die Pflückplatten als auch die Förderkette sind auf Grund des unmittelbaren Zusammenwirkens mit dem Erntegut einer hohen mechanischen Belastung ausgesetzt, die eine regelmäßige Wartung durch ein Nachspannen der Förderkette mittels der Spannvorrichtung beziehungsweise ein Auswechseln von Förderkette oder Pflückplatten erforderlich werden lässt.

Aus der EP 1 491 083 A2 ist es bekannt, die Pflückplatten einer Pflückeinheit mit einer daran befestigten Abstreifkante auszuführen, die austauschbar mit Pflückplatte verschraubt oder vernietet ist. Der Austausch der unterhalb der Fördervorrichtung angeordneten Pflückplatten beziehungsweise der daran befestigten Abstreifkanten ist aufwändig, da zuvor die Fördervorrichtung demontiert werden muss, bevor die Schraub- oder Nietverbindungen, mit denen die Abtreifkante mit der Pflückplatte verbunden ist, zugänglich werden. Daraus resultiert ein hoher zeitlicher Aufwand für Wartungstätigkeiten.

Des Weiteren ist aus der DE 198 34 248 A1 eine Spannvorrichtung für die Förderkette der Fördervorrichtung einer Pflückeinheit bekannt, welche eine auf einer Gewindestange angeordnete Druckfeder umfasst. Die Druckfeder stützt sich mit einem Ende an einer auf der Gewindestange befindlichen Mutter ab und mit ihrem anderen Ende an einem Anschlag, der mit einem als Kettenrad ausgeführten, in axialer Richtung verschiebbaren Umlenkelement in Verbindung steht. Um die Förderkette im Bedarfsfall austauschen zu können, ist es erforderlich, ein oberhalb der Kettenräder und der Förderkette angeordnetes plattenförmiges Führungsteil, welches einerseits der Führung der Förderkette und andererseits der Führung eines Verstellmechanismus der verstellbaren Pflückplatte dient, zu demontieren. Für den Austausch der Pflückplatten gilt dies entsprechend, wobei hier zusätzlich die Fördervorrichtung zumindest in Teilen demontiert werden muss. Entsprechend ist der Wartungsaufwand sehr hoch und die Handhabung komplex.

Aus der DE 196 22 719 A1 ist eine Pflückeinrichtung mit Einzugsketten, Abstreifplatten und darunter angeordneten Abstreifrollen bekannt.

Aus der US 4 845 930 A ist eine Pflückvorrichtung bekannt, die mit endlos umlaufenden Einzugsriemen, dazugehörigen Riemenspannern, Abstreifplatten, austauschbaren Abstreifkanten und darunter angeordneten Messerrollen ausgestattet ist.

Der Erfindung liegt somit die Aufgabe zugrunde, eine Vorrichtung der eingangs genannten Art derart weiterzuentwickeln, dass der Aufwand für die Wartung der Vorrichtung zum Ernten von stängeligem Erntegut gegenüber dem aus dem Stand der Technik bekannten Vorrichtungen deutlich reduziert und die Handhabung hierbei vereinfacht wird.

Diese Aufgabe wird erfindungsgemäß durch die Lehre des Patentanspruches 1 gelöst.

Vorteilhafte Weiterbildungen der Erfindung sind Gegenstand der abhängigen Unteransprüche.

Gemäß dem Anspruch 1 wird vorgeschlagen, dass die Spannvorrichtung, die oberhalb der verstellbaren Pflückplatte angeordnet ist, zur Auswechslung der Förderkette und eine Verriegelungseinrichtung zur lösbaren Befestigung einer der verstellbaren Pflückplatte zugeordneten austauschbaren Verschleißkante unabhängig voneinander betätigbar an dem Rahmenteil angeordnet sind. Die Förderkette und die Pflückplatten sind somit unabhängig voneinander auswechselbar an dem Rahmenteil angeordnet. Diese Anordnung ermöglicht eine Wartung beziehungsweise einen Austausch der Förderkette oder einer der Pflückplatten, ohne dass zuvor zumindest Teile der Fördervorrichtung oder der Pflückplatten beziehungsweise einer Verstellvorrichtung zur Verstellung der verstellbaren Pflückplatte entfernt werden müssten. So entfällt im Gegensatz zu dem aus dem Stand der Technik bekannten Vorgehen das notwendige Demontieren der Fördervorrichtung, um die Verschleißkante auswechseln zu können. Das Auswechseln der Förderkette wird ebenfalls vereinfacht, da im Gegensatz zu der aus der DE 198 34 248 A1 bekannten Lösung nicht die der Führung des Verstellmechanismus der verstellbaren Pflückplatte dienenden Teile entfernt werden müssen, um die Spannvorrichtung in der Weise betätigen zu können, dass die Förderkette entlastet wird.

Zusätzlich wird vorgeschlagen, dass die Spannvorrichtung, die oberhalb der verstellbaren Pflückplatte angeordnet ist, zur Auswechslung der Förderkette und eine Verriegelungseinrichtung zur lösbaren Befestigung einer der verstellbaren, mehrteiligen Pflückplatte zugeordneten austauschbaren Verschleißkante von außen zugänglich sind. Insbesondere sind die Spannvorrichtung sowie die Verriegelungseinrichtung von der Oberseite der Vorrichtung her zugänglich, wobei es keiner Demontage von Teilen der Fördervorrichtung oder Teilen der Pflückplatten beziehungsweise des Verstellmechanismus bedarf.

So kann die verstellbare Pflückplatte ein mit dem Rahmenteil verbundenes Führungsblech und eine lösbar auf dem Führungsblech angeordnete Abstreifkante aufweisen. Durch die mehrteilige Ausführung der verstellbaren Pflückplatte wird der Material- und Montageaufwand reduziert.

Hierzu kann die Verschleißkante durch die als zumindest eine Kombinationsanordnung eines formschlüssigen Verbindungsmittels und eines kraftschlüssigen Verbindungsmittels ausgeführte Verriegelungseinrichtung lösbar mit dem Führungsblech verbunden. Entsprechende Verbindungsmittel sind vorteilhafterweise in einem Bereich innerhalb der umlaufenden Förderkette positioniert. Auf diese Weise sind die Verbindungsmittel von außen, insbesondere von oberhalb der Pflückeinrichtung, das heißt von der den Pflückwalzen abgewandten Seite, zugänglich.

Dabei kann das kraftschlüssige Verbindungsmittel als Schraubverbindung ausgeführt sein. Die sich parallel zu den Pflückwalzen erstreckende Verschleißkante kann zumindest zwei Verbindungsvorsprünge aufweisen, welche sich senkrecht zur Längsachse der Verschleißkante auf der dem Pflückspalt abgewandten Seite nach außen erstrecken. Die Verbindungsvorsprünge können jeweils eine als Langloch ausgeführte Ausnehmung aufweisen, welches senkrecht zum Pflückspalt orientiert ist. Durch dieses Langloch kann sich eine Schraube, insbesondere eine Passschraube, erstrecken, welche mit einer korrespondierenden Gewindebohrung im Rahmenteil verschraubbar ist. Hierzu kann das unterhalb der Verschleißkante auf dem Rahmenteil angeordnete Führungsblech ebenfalls eine als Langloch ausgeführte Ausnehmung, die mit der der Verschleißkante korrespondiert. Die Schraube ist innerhalb der Ausnehmung beweglich, so dass die Verstellbarkeit von Führungsblech und Verschleißkante der verstellbaren Pflückplatte gewährleistet sind.

Des Weiteren kann das formschlüssige Verbindungsmittel als Steckverbindung ausgeführt sein. Hierzu können an dem jeweiligen Verbindungsvorsprung zwei Rastvorsprünge angeordnet sein, welche sich parallel zur Längsachse der Verschleißkante erstrecken. Die Rastvorsprünge weisen dabei vorteilhafterweise in Einzugsrichtung der Förderketten. Auf der Oberseite des Führungsblechs der verstellbaren Pflückplatte befinden sich mit der Form der Rastvorsprünge korrespondierende bogenförmige Aufnahmen, in welche die Rastvorsprünge eingreifen.

Die Kombination aus jeweils einem kraftschlüssigem und einem formschlüssigem Verbindungsmittel ermöglicht eine einfache und sichere Handhabung bei einem erforderlichen Austausch der Verschleißkante. Zunächst werden die Schrauben gelöst, welche die Verschleißkante gegen eine axiale Bewegung in Längsrichtung des Führungsbleches relativ zu diesem absichern. Nach dem Lösen der Schrauben kann das die Verschleißkante in Längsrichtung in Richtung der Pflückspaltöffnung verschoben werden. Im Anschluss daran kann die Verschleißkante zur Mitte des Pflückspaltes hin bewegt und herausgezogen werden. Der Einbau einer neuen Verschleißkante kann in umgekehrter Reihenfolge durchgeführt werden. Vorteilhafterweise kann die feststehende Pflückplatte mittels einer kraftschlüssigen Schraubverbindung an dem Rahmenteil befestigt sein, so dass lediglich die Schraubverbindung zu lösen ist, um die feststehende Pflückplatte zunächst in Richtung des Pflückspaltes und anschließend entlang des Pflückspaltes aus diesem herausziehen zu können.

In bevorzugter Weiterbildung der Erfindung ist vorgesehen, dass die Spanneinrichtung eine mit dem Rahmenteil verbundene Kniehebelanordnung umfasst, die eine Feder zum Spannen der Förderkette mit einer Kraft beaufschlagt. Hierbei wird eines der Umlenkelemente, vorzugsweise das der Pflückspaltöffnung zugewandte Umlenkelement, mit einer in axialer Richtung wirkenden Federkraft beaufschlagt, welche die notwendige Spannung der Förderkette aufrechterhält.

Dabei kann die Spanneinrichtung durch von der Oberseite des Rahmenteils her zugängliche Sicherungsmittel gesichert sein. Die Sicherungsmittel dienen dazu, ein unbeabsichtigtes Entlasten der Förderkette während des Betriebes der Vorrichtung zu verhindern. Die Anordnung der Sicherungsmittel analog der Anordnung der Verbindungsmittel zur lösbaren Befestigung der Pflückplatten ermöglicht einen Austausch der Förderkette unabhängig von einer vorherigen Demontage der darunter befindlichen Pflückplatten.

Hierzu können die Sicherungsmittel als ein die Kniehebelanordnung sichernder Bolzen oder Splint und als eine Sperrklinke ausgeführt sein. Mittels des Bolzens oder des Splintes kann ein Überschlagen der Kniehebelanordnung aus ihrer unteren Totpunktlage, in welcher das Umlenkelement mit der Federkraft beaufschlagt ist, vermieden werden.

Dabei kann die Sperrklinke lösbar mit der Feder in Eingriff stehen. Die Sperrklinke kann hierzu zwischen zwei Windungen der als eine Druckfeder ausgeführten Feder eingreifen, um diese in ihrer Position zu sichern. Um die im Eingriff mit der Druckfeder befindliche Sperrklinke zu lösen, ist der Sperrklinke eine Schenkelfeder zugeordnet, welche die Sperrklinke mit einer Haltekraft beaufschlagt.

Zum Austauschen der Förderkette kann der Splint oder ein selbstsichernder Bolzen entfernt werden und die auf die Sperrklinke einwirkende Schenkelfeder außer Eingriff gebracht werden. Hierdurch wird das Umlenkelement entlastet, so dass es in Längsrichtung der Pflückeinrichtung verschoben werden kann .Die Förderkette ist nunmehr ohne weiteres abnehmbar und durch eine neue ersetzbar.

Die vorliegende Erfindung wird nachstehend anhand eines in den Zeichnungen dargestellten Ausführungsbeispiels näher erläutert.

Es zeigen:
- Fig. 1: eine schematische Seitenansicht einer Pflückvorrichtung zum Ernten von stängeligem Erntegut;
- Fig. 2: eine schematische Teilansicht einer Pflückeinheit der Pflückvorrichtung gemäß Fig. 1 in einer Ansicht von oben;
- Fig. 3: eine schematische Teilansicht einer Pflückeinheit der Pflückvorrichtung gemäß Fig. 1 in einer perspektivischen Ansicht von schräg vorne;
- Fig. 4: eine schematische Teilansicht der Pflückeinheit der Pflückvorrichtung gemäß Fig. 3 in einer perspektivischen Ansicht von schräg hinten.

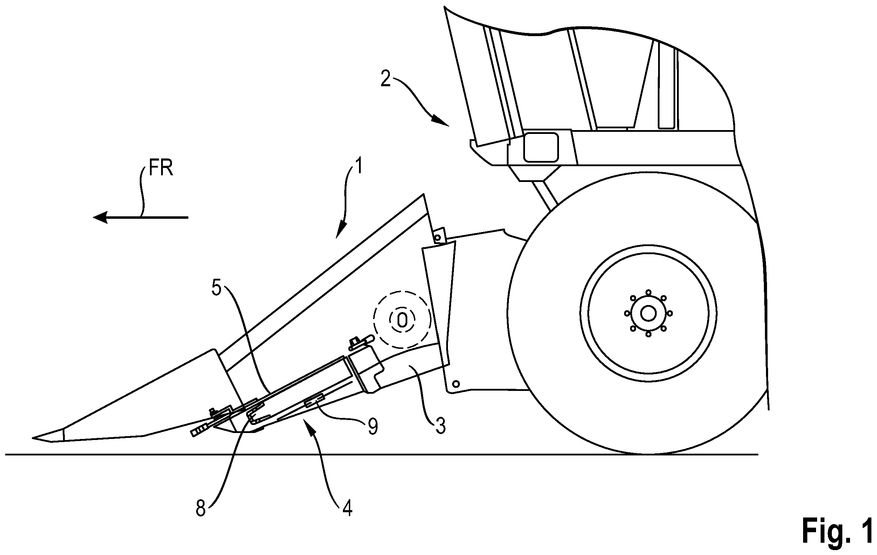

Die Darstellung in Fig.1 zeigt schematisch eine Pflückvorrichtung 1 zum Ernten von stängeligem Erntegut, insbesondere Mais oder dergleichen, die in ihrem rückwärtigen Bereich an einem nicht näher dargestellten Trägerfahrzeug 2, vorzugsweise einem Mähdrescher oder einem Feldhäcksler adaptiert ist. Die Pflückvorrichtung 1 umfasst zumindest eine an einem Rahmenteil 3 angeordnete Pflückeinheit 4. Die Pflückeinheit 4 verfügt in ihrem in Fahrtrichtung FR vorn liegenden Bereich über einen oder mehrere Pflückspalte 7 bildende feststehende Pflückplatten 5 sowie verstellbare Pflückplatten 6, wobei den Pflückspalten 7 untenseitig paarweise angeordnete ein- oder mehrteilig ausgeführte zylindrische oder konische Pflückwalzen 8 zugeordnet sind, die an ihrem Umfang Profilsegmente aufweisen. Durch einen gegenläufigen Antrieb der Pflückwalzen 8 wird der von den Profilsegmenten der Pflückwalzen 8 erfasste Halmgutstängel in vertikaler Richtung nach unten eingezogen, wobei im Bereich des Pflückspalts 7 die Fruchtstände vom Halmgutstängel des Erntegutes abgetrennt werden. Dabei erfährt der Halmgutstängel die Verrottung fördernde Deformationen, bleibt aber in seiner stängeligen Form erhalten. Unterhalb der Pflückwalzen 8 ist jedem Pflückspalt 7 eine um eine vertikale Achse umlaufende Häckseleinrichtung 9 zugeordnet. Die verstellbare Pflückplatte 6 ist mittels eines nicht dargestellten Verstellmechanismus hinsichtlich ihres Abstandes zu der feststehenden Pflückplatte 5 zur Variation der Pflückspaltbreite bewegbar.

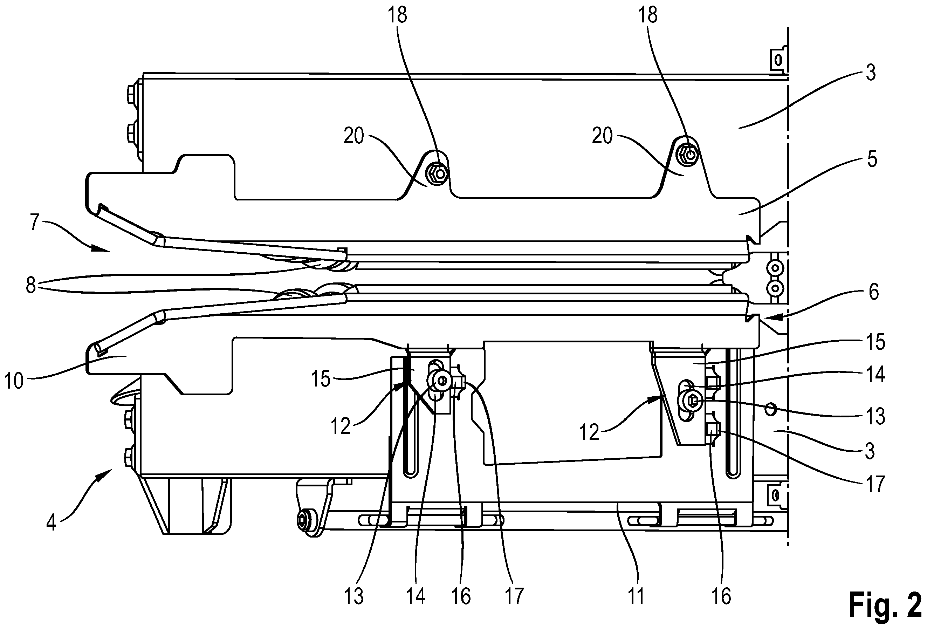

Die Darstellung in Fig. 2 zeigt eine schematische Teilansicht einer Pflückeinheit 4 der Pflückvorrichtung 1 gemäß Fig. 1 in einer Ansicht von oben. Dazu sind in Fig. 2 zur besseren Veranschaulichung im Wesentlichen nur der Rahmenteil 3, die Pflückwalzen 8 sowie die oberhalb der Pflückwalzen 8 auf dem Rahmenteil 3 angeordnete feststehende Pflückplatte 5 und die verstellbare Pflückplatte 6 wiedergegeben. Zu erkennen ist der Pflückspalt 7, welcher sich zwischen der feststehenden Pflückplatte 5 und der verstellbaren Pflückplatte 6 ausbildet. Die feststehende Pflückplatte 5 ist einteilig ausgeführt und durch zwei Befestigungsschrauben 18, welche sich durch Befestigungsabschnitte 20 an der dem Pflückspalt 7 abgewandten Seite der feststehenden Pflückplatte 5 nach außen erstrecken, lösbar an dem Rahmenteil 3 fixiert.

Die der feststehenden Pflückplatte 5 gegenüberliegende verstellbare Pflückplatte 6 ist mehrteilig ausgeführt und umfasst zumindest eine Verschleißkante 10 sowie ein Führungsblech 11. Das Führungsblech 11 dient der Übertagung der Verstellbewegung quer zum Pflückspalt 7 der verstellbaren Pflückplatte 6 zur Einstellung des Pflückspaltes 7. Hierzu wird das Führungsblech 11 gemeinsam mit der daran angeordneten Verschleißkante 10, die den Pflückspalt 7 in Längsrichtung der Pflückwalzen 8 begrenzt, durch den Verstellmechanismus betätigt. Die Verschleißkante 10 ist austauschbar an dem Führungsblech 11 beziehungsweise dem Rahmenteil 3 befestigt.

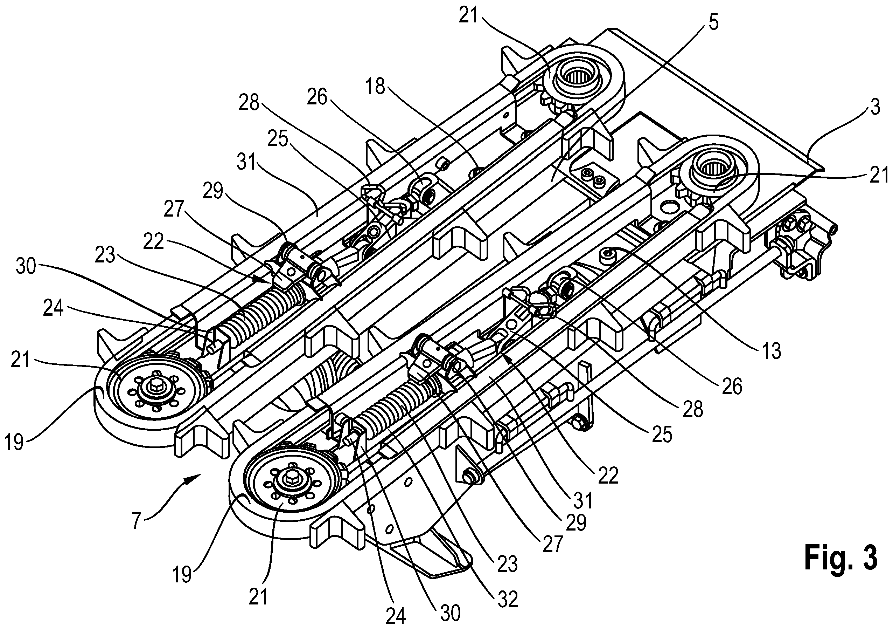

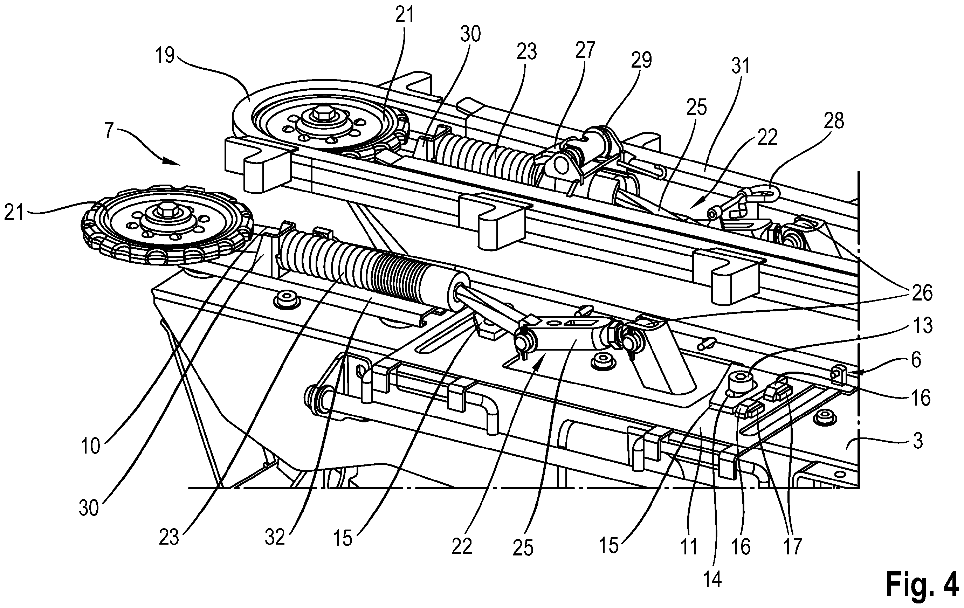

Zur lösbaren Befestigung der Verschleißkante 10 an dem Führungsblech 11 ist diese durch als zumindest eine Kombinationsanordnung eines formschlüssigen Verbindungsmittels und eines kraftschlüssigen Verbindungsmittels ausgeführte Verriegelungseinrichtung 12 mit dem Führungsblech 11 verbunden. Die Verschleißkante 10 weist zumindest zwei zueinander beabstandete Verbindungsvorsprünge 15 auf, die jeweils das Führungsblech 11 abschnittsweise überlappen. Sowohl das Führungsblech 11 als auch die Verbindungsvorsprünge 15 weisen jeweils in Ausrichtung und Länge miteinander korrespondierende Langlöcher 14 auf. Die Langlöcher 14 erstrecken sich dabei im Wesentlichen senkrecht zu dem Pflückspalt 7. Durch das jeweilige Langloch 14 erstreckt sich jeweils eine Passschraube 13 als kraftschlüssiges Verbindungsmittel in eine korrespondierende Gewindebohrung in dem Rahmenteil 3. Die Langlöcher 14 in der Verschleißkante 10 sowie dem Führungsblech 11 haben die Funktion, die quer zu dem Pflückspalt 7 gerichtete Bewegung der verstellbaren Pflückplatte 6 zu ermöglichen, wodurch die Spaltbreite eingestellt wird. Weiterhin ist an dem jeweiligen Verbindungsvorsprung 15 ein Rastvorsprung 17 angeordnet, der sich nahezu parallel zum Pflückspalt 7 entgegen der Fahrtrichtung FR erstreckt. Der jeweilige Rastvorsprung 17 ist mit einer auf der Oberseite des Führungsbleches 11 angeordneten bogenförmigen Aufnahme 16 formschlüssig in Form einer Steckverbindung in Eingriff bringbar. Das als Passschraube 13 ausgeführte kraftschlüssige Verbindungsmittel sichert die formschlüssige Steckverbindung gegen eine Bewegung der Verschleißkante 10 oder des Führungsbleches 11 in Längsrichtung des Pflückspaltes 7, um ein unbeabsichtigtes Trennen der Steckverbindung zu vermeiden. Die Anordnung der Passschrauben 13 ist derart gewählt, dass diese von außen zugänglich sind, ohne dass es einer Demontage von Teilen der Pflückeinheit 4, wie beispielsweise einer Spannvorrichtung 22 zur Aufrechterhaltung der Spannung der Förderkette 19, bedarf, was nachfolgend anhand der Fig. 3 und 4 weiter veranschaulicht wird.

Zum Austausch der Verschleißkante 10 werden die Passschrauben 13 entfernt. Im Anschluss daran ist die Verschleißkante 10 in Fahrtrichtung FR verschiebbar, um die Steckverbindung zwischen dem Rastvorsprung 17 und der bogenförmigen Aufnahme 16 zu lösen. Nachdem die Verriegelungseinrichtung gelöst wurde, ist die Verschleißkante 10 zur Mitte hin, das heißt in Richtung des Pflückspaltes 7, verschiebbar, um sie anschließend in Richtung der Öffnung des Pflückspaltes 7 aus der Pflückeinheit 4 herauszuziehen. Die Montage einer neuen Verschleißkante 10 erfolgt in umgekehrter Abfolge. Für die gegenüberliegende feststehende Pflückplatte 5 ist es ausreichend, die Befestigungsschrauben 18 zu lösen, um diese daraufhin anschließend in Richtung der Öffnung des Pflückspaltes 7 aus der Pflückeinheit 4 herauszuziehen.

Die Darstellung in den Fig. 3 und 4 zeigt eine schematische Teilansicht der Pflückeinheit 4 der Pflückvorrichtung 1 gemäß Fig. 1 in einer perspektivischen Ansicht von schräg vorne sowie eine schematische Teilansicht der Pflückeinheit 4 der Pflückvorrichtung 1 gemäß Fig. 3 in einer perspektivischen Ansicht von schräg hinten. Oberhalb der feststehenden Pflückplatte 5 und der verstellbaren Pflückplatte 6 befindet sich die Fördervorrichtung zum Fördern des stängeligen Erntegutes entlang des Pflückspaltes 7. Die Fördervorrichtung umfasst um Umlenkelemente 21 endlos umlaufende Förderketten 19, die abschnittsweise in parallel zueinander auf der Oberseite des Rahmenteils 3 angeordneten U-förmigen Kettenführungen 31 geführt sind. Die Kettenführungen 31 erstrecken sich paarweise zwischen den Umlenkelementen 21 parallel zu der feststehenden Pflückplatte 5 sowie der verstellbaren Pflückplatte 6.

Zwischen den jeweiligen Kettenführungen 31 ist jeweils eine Spanneinrichtung 22 angeordnet, mittels der die notwendige Spannung der jeweiligen Förderkette 19 aufrechterhalten wird. Die Spanneinrichtungen 22, die oberhalb der feststehenden Pflückplatte 5 sowie der verstellbaren Pflückplatte 6 angeordnet sind, unterscheiden sich nicht in ihrem Aufbau und ihrer Funktionsweise. Die Spanneinrichtung 22 umfasst eine mit dem Rahmenteil 3 verbundene Kniehebelanordnung 25, die eine Druckfeder 23 zum Spannen der Förderkette 19 mit einer Kraft beaufschlagt. Die Druckfeder 23 ist auf einer sich abschnittsweise in Längsrichtung der Pflückeinheit 4 erstreckenden Federführung 24 angeordnet, die sich an einem senkrechten Anschlag 30 abstützt. Die Federführung 24 ist mit ihrem anderen Ende mit der Kniehebelanordnung 25 verbunden. Der Anschlag 30 ist auf einer Gleitschiene 32 angeordnet, an deren der Kniehebelanordnung 25 abgewandten das Umlenkelement 21 drehbar gelagert ist. Die Gleitschiene 32 ist relativ zu dem Rahmenteil 3 in Längsrichtung der verstellbaren Pflücklatte 6 verschieblich auf diesem angeordnet.

An dem der Druckfeder 23 abgewandten Ende der Kniehebelanordnung 25 ist eine Augenschraube 26 vorgesehen, mittels der die von der Kniehebelanordnung 25 in der dargestellten unteren Totpunktstellung auf die Druckfeder 23 aufgebrachte Kraft nachjustierbar ist. Die Kniehebelanordnung 25 ist in ihrer unteren Totpunktstellung durch einen Splint 28, einen selbstsichernden Bolzen oder dergleichen gesichert.

Weiterhin ist zwischen den Kettenführungen 31 eine Sperrklinke 27 um eine horizontale Achse schwenkbar gelagert, deren freies Ende mit der Druckfeder 23 in Eingriff steht. Der Sperrklinke 27 ist eine Schenkelfeder 29 zugeordnet, welche sich mit einem Schenkel auf der Sperrklinke 27 abstützt und diese in ihrer mit der Druckfeder 23 in Eingriff befindlichen Position hält. Alle der Aufrechterhaltung der Spannung der Förderkette 19 dienenden Elemente der Spanneinrichtung 22 befinden sich zwischen den jeweiligen Kettenführungen 31 und erstecken sich im Wesentlichen achsparallel zu der verstellbaren Pflückplatte 6. Das Austauschen der Förderkette 19 erfolgt durch das Entfernen des Splintes 28 und das Lösen der Sperrklinke 27 durch die Betätigung der Schenkelfeder 29. Danach ist die Kniehebelanordnung 25 in ihre obere Totpunktlage überführbar, in welcher die Förderkette 19 entlastet ist. Das Umlenkelement 21 ist mitsamt der Gleitschiene 32 entgegen der Fahrtrichtung FR relativ zum Rahmenteil 3 verschieblich, so dass die Förderkette 19 ohne weiteres von den Umlenkelementen 21 gelöst werden kann, um sie gegen eine neue auszutauschen.

Wie insbesondere aus der Darstellung in Fig. 4 ersichtlich ist, sind die Passschrauben 13, die die Verschleißkante 10 der verstellbaren Pflückplatte 6 sichern, hinter beziehungsweise neben der Kniehebelanordnung 25 angeordnet, so dass die Passschrauben 13 von oben her ungehindert zugänglich sind, um die Verschleißkante 10 vom Führungsblech 11 lösen zu können. Das Entfernen von Teilen der Fördervorrichtung ist dabei nicht notwendig.

**Bezugszeichenliste**

| | | | |
|---|---|---|---|
| 1 | Pflückvorrichtung | 30 | Anschlag |
| 2 | Trägerfahrzeug | 31 | Kettenführung |
| 3 | Rahmenteil | 32 | Gleitschiene |
| 4 | Pflückeinheit | | |
| 5 | Feststehende Pflückplatte | | |
| 6 | Verstellbare Pflückplatte | | |
| 7 | Pflückspalt | | |
| 8 | Pflückwalze | | |
| 9 | Häckseleinrichtung | | |
| 10 | Verschleißkante | | |
| 11 | Führungsblech | | |
| 12 | Verriegelungseinrichtung | | |
| 13 | Passschraube | | |
| 14 | Langloch | | |
| 15 | Verbindungsvorsprung | | |
| 16 | Aufnahme | | |
| 17 | Rastvorsprung | | |
| 18 | Befestigungsschraube | | |
| 19 | Förderkette | | |
| 20 | Befestigungsabschnitt | | |
| 21 | Umlenkelement | | |
| 22 | Spannvorrichtung | | |
| 23 | Druckfeder | | |
| 24 | Federführung | | |
| 25 | Kniehebelanordnung | | |
| 26 | Augenschraube | | |
| 27 | Sperrklinke | | |
| 28 | Splint | | |
| 29 | Schenkelfeder | | |

## Patentansprüche

1. Pflückvorrichtung (1) zum Ernten von stängeligem Erntegut, umfassend zumindest eine an einem Rahmenteil (3) der Pflückvorrichtung (1) angeordnete Pflückeinheit (4), mit einer Fördervorrichtung, die um Umlenkelemente (21) endlos umlaufende, mit jeweils einer Spannvorrichtung (22) versehene Förderketten (19) zur Förderung des Erntegutes umfasst, sowie mit paarweise unterhalb der Fördervorrichtung, mit Abstand zueinander angeordneten Pflückplatten (5, 6), die entlang der Fördervorrichtung einen Pflückspalt (7) ausbilden, wobei der Pflückspalt (7) zwischen einer feststehenden Pflückplatte (5) und einer verstellbaren Pflückplatte (6) ausgebildet ist, und wobei eine Breite des Pflückspaltes (7) mittels wenigstens der senkrecht zum Verlauf des Pflückspaltes (7) verstellbaren Pflückplatte (6) variierbar ist, und unterhalb dessen eine oder mehrere Pflückwalzen (8) angeordnet sind, wobei die Spannvorrichtungen (22) oberhalb der feststehenden Pflückplatte (5) sowie der verstellbaren Pflückplatte (6) angeordnet sind, wobei die Spannvorrichtungen (22) zur Auswechslung der Förderketten (19) und eine Verriegelungseinrichtung (12) zur lösbaren Befestigung einer der verstellbaren Pflückplatte (6) zugeordneten austauschbaren Verschleißkante (10) unabhängig voneinander betätigbar an dem Rahmenteil (3) angeordnet und von außen zugänglich sind.

2. Pflückvorrichtung (1) nach Anspruch 1, **dadurch gekennzeichnet, dass** die verstellbare Pflückplatte (6) ein mit dem Rahmenteil (3) verbundenes Führungsblech (11) aufweist, auf dem die Verschleißkante (10) lösbar befestigt ist.

3. Pflückvorrichtung (1) nach Anspruch 2, **dadurch gekennzeichnet, dass** die Verschleißkante (10) durch die als zumindest eine Kombinationsanordnung eines formschlüssigen Verbindungsmittels und eines kraftschlüssigen Verbindungsmittels ausgeführte Verriegelungseinrichtung (12) lösbar mit dem Führungsblech (11) verbunden ist.

4. Pflückvorrichtung (1) nach Anspruch 3, **dadurch gekennzeichnet, dass** das kraftschlüssige Verbindungsmittel als Schraubverbindung (13) ausgeführt ist.

5. Pflückvorrichtung (1) nach Anspruch 3, **dadurch gekennzeichnet, dass** das formschlüssige Verbindungsmittel als Steckverbindung (16, 17) ausgeführt ist.

6. Pflückvorrichtung (1) nach Anspruch 5, **dadurch gekennzeichnet, dass** die Steckverbindung (16, 17) durch das kraftschlüssige Verbindungsmittel gesichert ist.

7. Pflückvorrichtung (1) nach einem der Ansprüche 5 oder 6, **dadurch gekennzeichnet, dass** die Steckverbindung (16, 17) durch eine in Längsrichtung der verstellbaren Pflückplatte (6) gerichtete Bewegung betätigbar ist.

8. Pflückvorrichtung (1) nach einem der vorangehenden Ansprüche, **dadurch gekennzeichnet, dass** die Spanneinrichtung (22) eine mit dem Rahmenteil (3) verbundene Kniehebelanordnung (25) umfasst, die eine Feder (23) zum Spannen der Förderkette (19) mit einer Kraft beaufschlagt.

9. Pflückvorrichtung (1) nach einem der vorangehenden Ansprüche, **dadurch gekennzeichnet, dass** die Spanneinrichtung (22) durch von der Oberseite des Rahmenteils (3) her zugängliche Sicherungsmittel gesichert ist.

10. Pflückvorrichtung (1) nach den Ansprüchen 8 und 9, **dadurch gekennzeichnet, dass** die Sicherungsmittel als ein die Kniehebelanordnung (25) sichernder Splint (28) oder Bolzen sowie als eine Sperrklinke (27) ausgeführt sind.

11. Pflückvorrichtung (1) nach Anspruch 10, **dadurch gekennzeichnet, dass** die Sperrklinke (27) lösbar mit der Feder (23) in Eingriff steht.

## Claims

1. A picking device (1) for harvesting stalk crop material, including at least one picking unit (4) arranged on a frame portion (3) of the picking device (1), with a conveyor device including conveyor chains (19) for conveying the crop material, that endlessly rotate around deflection elements (21) and are provided with a tensioning device (22), and with mutually spaced picking plates (5, 6) arranged pair-wise beneath the conveyor device and forming along the conveyor device a picking gap (7), wherein the picking gap (7) is formed between a stationary picking plate (5) and an adjustable picking plate (6) and wherein a width of the picking gap (7) is variable by means of at least the picking plate (6) which is adjustable perpendicularly to the extent of the picking gap (7), and below which one or more picking rollers (8) are arranged, wherein the tensioning devices (22) are arranged above the stationary picking plate (5) and the adjustable picking plate (6), wherein the tensioning devices (22) for replacing the conveyor chains (19) and a locking device (12) for releasably fixing a replaceable wear edge (10) associated with the adjustable picking plate (6) are arranged on the frame portion (3) actuably independently of each other and accessible from the exterior.

2. A picking device (1) according to claim 1 **characterised in that** the adjustable picking plate (6) has a guide plate (11) which is connected to the frame portion (3) and on which the wear edge (10) is releasably fixed.

3. A picking device (1) according to claim 2 **characterised in that** the wear edge (10) is releasably connected to the guide plate (11) by the locking device (12) which is in the form of at least one combination arrangement of a positive locking connection means and a force-locking connection means.

4. A picking device (1) according to claim 3 **characterised in that** the force-locking connection means is in the form of screw connection (13).

5. A picking device (1) according to claim 3 **characterised in that** the positively locking connection means is in the form of a plug connection (16, 17).

6. A picking device (1) according to claim 5 **characterised in that** the plug connection (16, 17) is secured by the force-locking connection means.

7. A picking device (1) according to one of claims 5 or 6 **characterised in that** the plug connection (16, 17) is actuable by a movement directed in the longitudinal direction of the adjustable picking plate (6).

8. A picking device (1) according to one of the preceding claims **characterised in that** the tensioning device (22) includes a toggle arrangement (25) which is connected to the frame portion (3) and which applies a force to a spring (23) for tensioning the conveyor chain (19).

9. A picking device (1) according to one of the preceding claims **characterised in that** the tensioning device (22) is secured by securing means accessible from the top side of the frame portion (3).

10. A picking device (1) according to claim 8 and claim 9 **characterised in that** the securing means are in the form of a cotter pin (28) or bolt for securing the toggle arrangement (25) and in the form of a pawl (27).

11. A picking device (1) according to claim 10 **characterised in that** the pawl (27) is releasably engaged with the spring (23).

## Revendications

1. Dispositif cueilleur (1) pour la récolte de produit de récolte en tiges, comprenant au moins une unité de cueillage (4) disposée sur une partie de cadre (3) du dispositif cueilleur (1), avec un dispositif d'alimentation qui comprend des chaînes d'alimentation (19) défilant en continu autour d'éléments de renvoi (21) et pourvues chacune d'un dispositif tendeur (22) pour convoyer le produit de récolte, ainsi qu'avec des plaques cueilleuses (5, 6) qui sont disposées par paires sous le dispositif d'alimentation à distance l'une de l'autre et qui forment une fente de cueillage le long du dispositif d'alimentation, la fente de cueillage (7) étant ménagée entre une plaque cueilleuse fixe (5) et une plaque cueilleuse réglable (6), et une largeur de la fente de cueillage (7) étant modifiable au moyen d'au moins la plaque cueilleuse (6) réglable perpendiculairement au tracé de la fente de cueillage (7), et sous laquelle sont disposés un ou plusieurs rouleaux cueilleurs (8), les dispositifs tendeurs (22) étant disposés au-dessus de la plaque cueilleuse fixe (5) ainsi que de la plaque cueilleuse réglable (6), les dispositifs tendeurs (22) et un équipement de verrouillage (12) étant disposés sur la partie de cadre (3) avec la possibilité d'être actionnés indépendamment l'un de l'autre et étant accessibles de l'extérieur, respectivement en vue du remplacement des chaînes d'alimentation (19) et en vue de la fixation amovible d'un bord d'usure (10) remplaçable associé à la plaque cueilleuse réglable (6).

2. Dispositif cueilleur (1) selon la revendication 1, **caractérisé en ce que** la plaque cueilleuse réglable (6) comporte une tôle de guidage (11) qui est reliée à la partie de cadre (3) et sur laquelle le bord d'usure (10) est fixé de manière amovible.

3. Dispositif cueilleur (1) selon la revendication 2, **caractérisé en ce que** le bord d'usure (10) est relié de manière amovible à la tôle de guidage (11) par l'intermédiaire de l'équipement de verrouillage (12) conçu sous la forme d'au moins un agencement combiné d'un moyen de liaison par complémentarité de formes et d'un moyen de liaison par complémentarité de forces.

4. Dispositif cueilleur (1) selon la revendication 3, **caractérisé en ce que** le moyen de liaison par complémentarité de forces est conformé en liaison vissée (13).

5. Dispositif cueilleur (1) selon la revendication 3, **caractérisé en ce que** le moyen de liaison par complémentarité de formes est conformé en liaison enfichée (16, 17).

6. Dispositif cueilleur (1) selon la revendication 5, **caractérisé en ce que** la liaison enfichée (16, 17) est bloquée par l'intermédiaire du moyen de liaison par complémentarité de forces.

7. Dispositif cueilleur (1) selon une des revendications 5 ou 6, **caractérisé en ce que** la liaison enfichée (16, 17) est actionnable par l'intermédiaire d'un déplacement orienté dans la direction longitudinale de la plaque cueilleuse réglable (6).

8. Dispositif cueilleur (1) selon une des revendications précédentes, **caractérisé en ce que** l'équipement tendeur (22) comprend un agencement à levier coudé (25) qui est relié à la partie de cadre (3) et qui sollicite avec une force un ressort (23) pour tendre la chaîne d'alimentation (19)

9. Dispositif cueilleur (1) selon une des revendications précédentes, **caractérisé en ce que** l'équipement tendeur (22) est bloqué par l'intermédiaire de moyens de blocage accessibles par le dessus de la partie de cadre (3).

10. Dispositif cueilleur (1) selon les revendications 8 et 9, **caractérisé en ce que** les moyens de blocage sont conçus sous la forme d'une goupille fendue (28) ou d'une cheville bloquant l'agencement à levier coudé (25) ainsi que sous la forme d'un cliquet d'arrêt (27).

11. Dispositif cueilleur (1) selon la revendication 10, **caractérisé en ce que** le cliquet d'arrêt (27) est en prise de manière amovible avec le ressort (23) .
